# EUROPEAN PATENT SPECIFICATION

(11) **EP 3 643 841 B1**
(45) Date of publication and mention of the grant of the patent: **31.08.2022**
(21) Application number: 19204599.5
(22) Date of filing: 22.10.2019
(51) Int. Cl.: E02F 9/08, F15B 1/26

(54) **HYDRAULIC FILL SYSTEM**
HYDRAULISCHES FÜLLSYSTEM
SYSTÈME DE REMPLISSAGE HYDRAULIQUE

(30) Priority: 23.10.2018 US 201816168351
(43) Date of publication of application: 29.04.2020
(73) Proprietor: CNH Industrial Italia S.p.A., 10135 Torino (IT)
(72) Inventor: HERTSGAARD, Timothy, Fargo, North Dakota 58104 (US); RASSET, John T., Barnesville, Minnesota 56514 (US); PAULSON, Thomas J., West Fargo, North Dakota 58078 (US)
(74) Representative: CNH Industrial IP Department

(56) References cited:
- CA-A- 858 885
- CN-A- 102 554 178
- DE-A1- 3 341 203
- DE-U1- 20 212 980
- US-A- 5 426 805
- US-A- 5 794 805

## Description

### BACKGROUND

The present disclosure generally relates to an agricultural system.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Agricultural equipment enables the planting and harvesting of various crops. Some of this equipment may be self-propelled such as a harvester while others may be coupled to a tractor and towed across a field. These pieces of equipment may have a variety of actuators that use hydraulic pressure to operate. For example, a planter may use hydraulic pressure to facilitate forming trenches in the soil, controlling the amount of down pressure on a row unit, and for operating a press wheel to cover the trench. Other uses of hydraulic pressure may include operating brakes, raising/lowering lifts, etc. The hydraulic fluid that powers these various actuators is typically stored in a hydraulic tank. When hydraulic fluid is needed by actuators, it is pressurized and driven by a pump through hydraulic lines to the actuators. Overtime the hydraulic fluid in the tank may be replenished or replaced. US5794805 discloses a hydraulic reservoir tank formed with a kiss-off structure interconnecting the opposing lateral sides of the reservoir tank to add strength and maintain integrity. Unfortunately, accessing and depositing hydraulic fluid in the hydraulic tank may be cumbersome. DE 3341203 discloses a hydraulic system according to the preamble of claim 1.

### BRIEF DESCRIPTION

A hydraulic fill system according to claim 1, for an agricultural system that includes a hydraulic fluid tank with a conduit. The hydraulic fluid tank receives and stores hydraulic fluid. A hydraulic fill system couples to and facilitates filling of the hydraulic fluid tank. The hydraulic fill system includes an arm that rotates with respect to the hydraulic fluid tank between an extended position and a retracted position. The arm defines a channel. A connector couples to the arm. The connector defines an opening that receives the hydraulic fluid. A flexible conduit rests within the channel. The flexible conduit includes a first end and a second end. The first end couples to the conduit and the second end couples to the connector.

### DRAWINGS

These and other features, aspects, and advantages of the present disclosure will become better understood when the following detailed description is read with reference to the accompanying drawings in which like characters represent like parts throughout the drawings, wherein:
FIG. 1 is a perspective view of an embodiment of a work vehicle with a hydraulic fill system;
FIG. 2 is a perspective view of an embodiment of the hydraulic fill system of FIG. 1;
FIG. 3 is a perspective view of an embodiment of the hydraulic fill system of FIG. 1;
FIG. 4 is a perspective view of an embodiment of the hydraulic fill system of FIG. 1;
FIG. 5 is a partial perspective exploded view of an embodiment of the hydraulic fill system;
FIG. 6 is a side view of an embodiment of a hydraulic fill system that is not part of the present invention; and
FIG. 7 is a side view of an embodiment of a hydraulic fill system that is not part of the present invention.

### DETAILED DESCRIPTION

One or more specific embodiments of the present disclosure will be described below.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Moreover, the use of "top," "bottom," "above," "below," and variations of these terms is made for convenience, but does not require any particular orientation of the components.

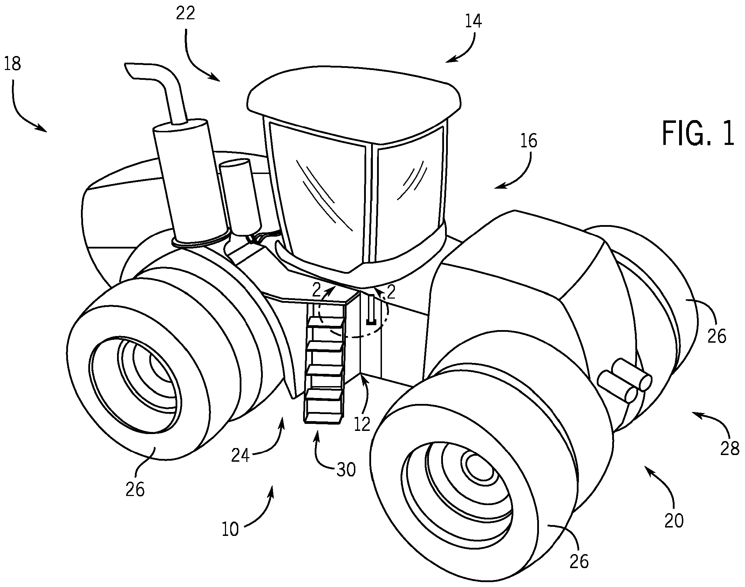

FIG. 1 is a perspective view of an embodiment of a work vehicle 10 with a hydraulic fill system 12. As illustrated, the work vehicle 10 may be a tractor; however, in other embodiments the work vehicle may be truck, harvester, or another type of agricultural vehicle. The work vehicle 10 includes a cab 14 supported by a chassis 16. The chassis 16 may also support a motor 18 (e.g., diesel engine, etc.), a brake system 20, a steering control system 22, a hydraulic system 24, among other components (e.g., an electrical system, a cooling system, etc.) that facilitate operation of the work vehicle 10.

During operation, the motor 18 provides power that drives wheels 26. The motor 18 may also provide power to the hydraulic system 24. For example, the hydraulic system 24 may include pump(s), valves, a reservoir, etc. In operation, the motor 18 provides power to a pump(s), which generates hydraulic pressure with the hydraulic fluid stored in the reservoir. The hydraulic fluid may then be directed using a series of valves to drive various systems on the work vehicle 10. These systems may include the brake system 20, the steering system 22, a lift, among others. The hydraulic pressure may also be used to operate equipment coupled to the work vehicle 10. In order to transfer pressurized hydraulic fluid from the work vehicle 10, the work vehicle 10 may include one or more hydraulic fluid connectors 28 that couple the hydraulic system 24 to other equipment. For example, the connectors 28 may enable pressurized hydraulic fluid to flow from the hydraulic system 24 to an agricultural implement coupled to the work vehicle 10, such as a planter. In operation, the planter uses the pressurized hydraulic fluid to drive various actuators to control down pressure on row units, depth of trenches, the degree of soil packing, etc. Other agricultural implements may use the pressurized hydraulic fluid to perform different operations, such as harvesting.

The hydraulic system 24 includes a hydraulic tank 30 that stores hydraulic fluid used by the hydraulic system 24 to control or operate various systems on the work vehicle 10. Periodically, the tank 30 may be refilled, such as when the hydraulic fluid is drained and then refilled. To facilitate filling the tank 30, the work vehicle 10 includes the hydraulic fill system 12. The hydraulic fill system 12 facilitates access to the tank 30, which may enable controlled filling of the tank 30. After using the hydraulic fill system 12, the hydraulic fill system 12 is stored on the work vehicle 10 and out of the way of other equipment.

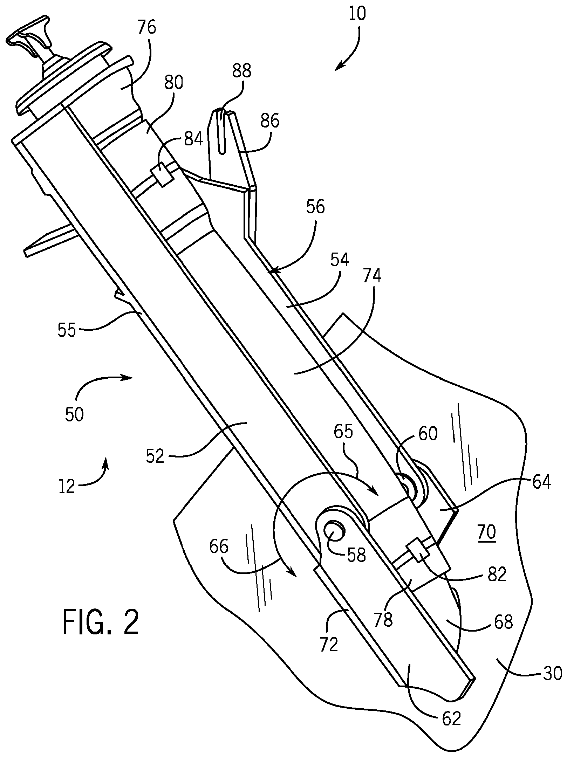

FIG. 2 is a perspective view of an embodiment of the hydraulic fill system 12 of FIG. 1. The hydraulic fill system 12 includes an arm 50 with first, second, and third walls 52, 54, and 55 that form a channel 56. The arm 50 couples to the work vehicle 10 with first and second connectors 58 and 60. The first connector 58 couples the first wall 52 to a first flange 62, and the second connector 60 couples the second wall 54 to a second flange 64. The first and second flanges 62 and 64 couple to the work vehicle 10 (e.g., tank 30) enabling the hydraulic fill system 12 to couple to the work vehicle 10. The first and second connectors 58 and 60 enable the arm 50 to rotate between extended and retracted positions. That is, as the arm 50 rotates in direction 65 it transitions to a retracted position, and as the arm 50 rotates in direction 66 it transitions to an extended position. The arm 50 rotates in direction 66 until the third wall 55 contacts a conduit 68 that extends from surface 70. In some embodiments, a third flange 72 may couple to the first and second flanges 62, 64. In embodiments including the third flange 72, the arm 50 rotates until it contacts the third flange 72.

The channel 56 formed by the first, second, third walls 52, 54, and 55 receives a flexible conduit 74. The flexible conduit 74 may be made out of a variety of materials including a rubber, a polymer(s), or a combination thereof. The flexible conduit 74 couples to the conduit 68 (e.g., rigid conduit) enabling the hydraulic fluid to be poured through the flexible conduit 74, the conduit 68, and into the tank 30. Coupling the flexible conduit 74 to the rigid conduit 68 enables the arm 50 to rotate between the extended and retracted positions. In some embodiments, the arm 50 may rotate between 10-50 degrees with respect to the surface 70 in order to block the flexible conduit 74 from kinking.

As illustrated, the flexible conduit 74 extends between the conduit 68 and a connector 76 with a first end 78 coupling to the conduit 68 and the second end 80 coupling to the connector 76. For example, the first end 78 may extend over a portion of the conduit 68 and the second end 80 may extend over a portion of the connector 76. To secure the conduit 68 in place, ring bands 82 and 84 may be used. As illustrated, the ring band 84 wraps around the flexible conduit 74 and the conduit 68 securing the flexible conduit 74 to the conduit 68. The ring band 82 may also facilitate formation and maintenance of a fluid tight seal between the flexible conduit 74 and the conduit 68 as the arm 50 moves between extended and retracted positions.

As will be explained below, the hydraulic fill system 12 includes a retention bracket or flange 86 that couples to the arm 50. The bracket 86 defines a notch 88 that enables the arm 50 to couple to the work vehicle 10 in a retracted position.

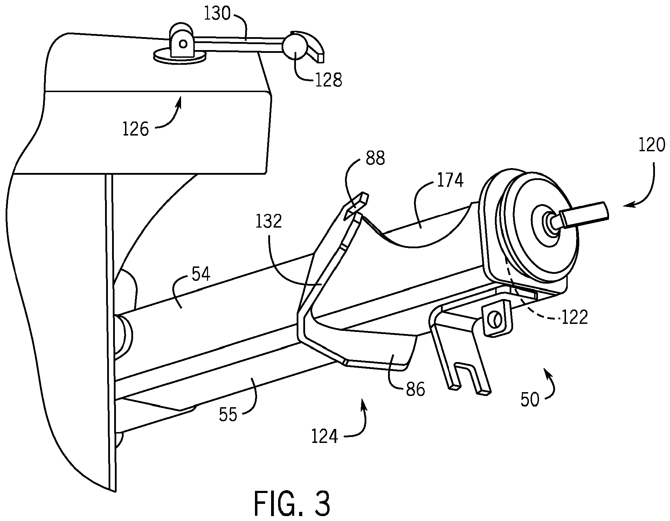

FIG. 3 is a perspective view of an embodiment of the hydraulic fill system 12 of FIG. 1 in an extended position. In this position, the hydraulic fill system facilitates access to and enables hydraulic fluid to be poured into the tank 30. More specifically, an operator is easily able to access the lid 120. Removal of the lid 120 provides access to the opening 122 in the connector 76. Hydraulic fluid may then be poured into the connector 76, which then passes through the flexible conduit 74 to the tank 30. Thus, by including the flexible conduit 74 supported by the arm 50, hydraulic fluid may be poured into the tank 30 at a convenient position away from the work vehicle 10. In other words, the hydraulic fill system 12 extends the opening (e.g., opening in conduit 68) further away from the work vehicle 10 so that other equipment on the work vehicle 10 (e.g., steps, hoses, bars) is less able to interfere with the transfer of hydraulic fluid to the tank 30.

In order to secure the hydraulic fill system 12 in a retracted position, the hydraulic fill system 12 includes a retention system 124. The retention system 124 includes the bracket 86 and a fastener 126. The bracket 86 couples to the arm 50. In some embodiments, the bracket 86 may be coupled (e.g., welded, made out one-piece) to the second and third walls 54, 55. By coupling to both the second and third walls 54, 55; the bracket 86 may be securely coupled to the arm 50 during operation of the work vehicle 10.

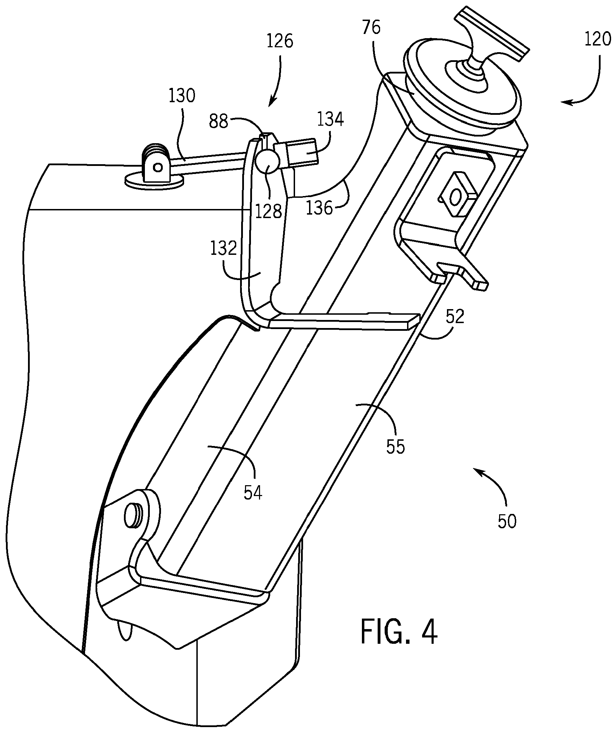

As explained above, the bracket 86 includes the notch 88. The notch 88 is configured to receive the fastener 126. The fastener 126 couples to the work vehicle 10 and includes an enlarged portion 128 (e.g., ball) coupled to a shaft 130. The fastener 126 includes a flexible material that enables the shaft 130 to be stretched and to contract. When coupled to the bracket 86, the shaft 130 is stretched as the operator pulls. The enlarged portion 128 is then placed into contact with the notch 88 on a side 132 of the bracket 86 facing away from the fastener 126, as illustrated in FIG. 4. When the operator releases the fastener 126, the shaft 130 contracts and applies a force on the arm 50, which reduces or blocks rotation of the arm 50. To facilitate stretching of the shaft 130 when coupling to the bracket 86, the fastener 126 may include prongs 132 that enable the operator to grab and pull the fastener 126.

FIG. 4 is a perspective view of an embodiment of the hydraulic fill system 12 in a retracted position. In the retracted position, the hydraulic fill system 12 may be less accessible and therefore less susceptible to contact with the operator and to other equipment. In order to release the hydraulic fill system 12 and access the tank 30, the operator grabs the prongs 132 and pulls. As the operator pulls, the shaft 130 stretches enabling the enlarged portion 128 of the fastener 126 to be moved out of the notch 88. In some embodiments, the second wall 54 of the arm 50 may define a recess or cutout 136 to facilitate access to and uncoupling of the fastener 126 from the arm 50.

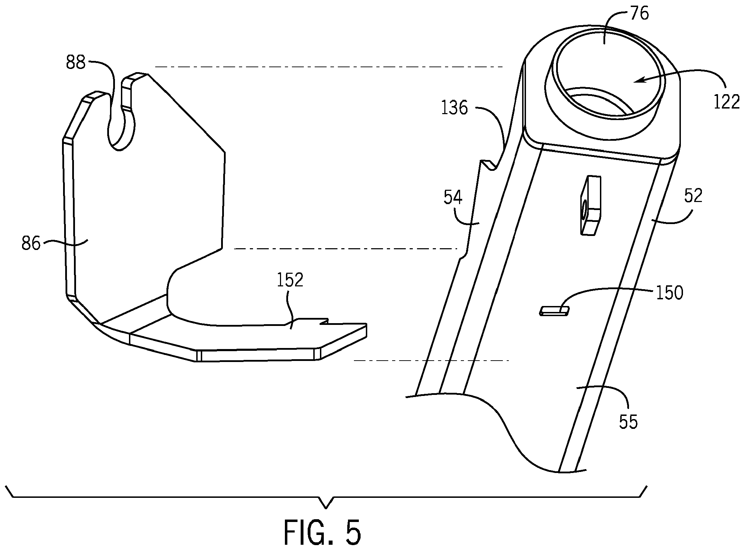

FIG. 5 is a partial perspective exploded view of an embodiment of the hydraulic fill system 12. As illustrated, the arm 50 may define an aperture 150 in the third wall 55. The aperture 150 receives a protrusion 152 on the bracket 86. The aperture 150 and protrusion 152 may facilitate alignment and coupling of the bracket 86 with the arm 50 during manufacturing. In some embodiments, after placing the protrusion 152 in the aperture 150, the bracket 86 is welded to the arm 50 or otherwise secured to the arm 50 (e.g., brazed, glued).

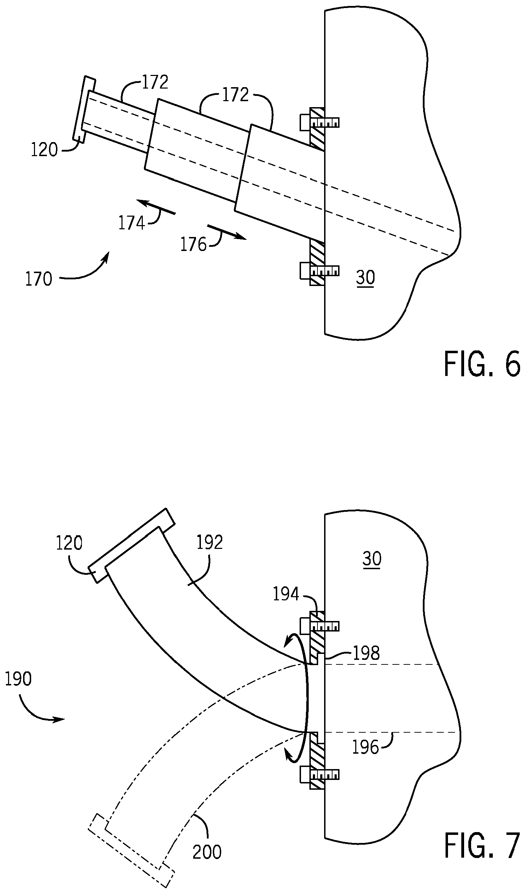

FIG. 6 is a side view of a hydraulic fill system 170 that is not part of the present invention and thus not covered by the claims. In FIG. 6, the hydraulic fill system 170 includes a plurality of telescoping cylinders 172 (e.g., concentric cylinders) that couple to the tank 30. The telescoping cylinders 172 telescope enabling the hydraulic fill system 170 to extend away from the tank 30 in direction 174 to facilitate filling of the tank 30. After filling the tank 30, the telescoping cylinders 172 may be collapsed in direction 176 and moved out of the way.

FIG. 7 is a side view of a hydraulic fill system 190 that is not part of the present invention. The hydraulic fill system 190 includes a conduit 192 that couples to the tank 30 to facilitate the flow of hydraulic fluid from a source to the tank 30. The conduit 192 couples to the tank 30 with a bonnet 194. The bonnet 194 enables sealing of the conduit 192 with the tank 30 and retention of the conduit 192 relative to an aperture 196 in a wall of the tank 30. More specifically, the bonnet 194 captures a ledge 198 of the conduit 192 between the bonnet 194 and the tank 30. The bonnet 194 also enables the conduit 192 to be rotated between a fill position and a stowed position. Accordingly, when the tank 30 needs fluid, the conduit 192 is rotated to a fill position and once filled rotated out of the way to a stowed position illustrated in dashed lines 200.

## Claims

1. A hydraulic fill system (12) for a working vehicle (10) configured to couple to and facilitate filling of a hydraulic fluid tank (30) of said working vehicle (10), said hydraulic fluid tank (30) comprising a conduit (68) and configured to receive and store hydraulic fluid; said hydraulic fill system (12) comprising:
an arm (50) configured to rotate with respect to the hydraulic fluid tank (30) between an extended position and a retracted position, the arm (50) defining a channel (56);
a connector (76) coupled to the arm (50), wherein the connector (76) defines an opening configured to receive hydraulic fluid; and
a flexible conduit (74) within the channel (56), the flexible conduit (74) defining a first end (78) and a second end (80), wherein the first end (78) couples to the conduit (68) and the second end couples to the connector (76),
**characterised in that** said hydraulic fill system (12) comprises a retention system (124) configured to secure the arm (50) in the retracted position,
wherein the retention system (124) comprises a bracket (86) coupled to the arm (50), the bracket defining a notch (88) configured for holding an enlarged portion (128) of a shaft (130) coupled to the working vehicle (10) .

2. The system of claim 1, wherein the arm (50) comprises a wall (54), wherein the wall (54) defines a recess (136) that provides access to said fastener (126).

3. The system of claim 1, comprising first and second flanges (62,64) configured to be coupled to the hydraulic fluid tank (30), and wherein the arm (50) couples to the first and second flanges (62,64) with a first connector (58,60) and a second connector (58,60).

4. The system of claim 1, wherein the arm (50) is configured to rotate between 10 and 50 degrees.

5. The system of claim 1, comprising a first ring band (82) and a second ring band (84), wherein the first ring band (82) couples the flexible conduit (74) to the conduit (68), and the second ring band (84) couples the flexible conduit (74) to the connector (76).

6. The system of claim 1, wherein the flexible conduit (74) has a first stiffness and the conduit (68) has a second stiffness, wherein the first stiffness is less than the second stiffness.

7. A work vehicle (10) comprising the hydraulic fluid tank (30) and the hydraulic fill system (12) according to any of the preceding claim.

## Patentansprüche

1. Hydraulisches Füllsystem (12) für ein Arbeitsfahrzeug (10), das dazu eingerichtet ist, mit einem Hydraulikfluidtank (30) des Arbeitsfahrzeugs (10) verbunden zu werden und dessen Befüllen zu ermöglichen, wobei der Hydraulikfluidtank (30) eine Leitung (68) umfasst und dazu eingerichtet ist, Hydraulikfluid aufzunehmen und zu speichern;
wobei das hydraulische Füllsystem (12) umfasst:
einen Ausleger (50), der dazu eingerichtet ist, bezüglich des Hydraulikfluidtanks (30) zwischen einer ausgeklappten Position und einer eingeklappten Position zu rotieren, wobei der Ausleger (50) einen Kanal (56) definiert;
ein Verbindungselement (76), das mit dem Ausleger (50) verbunden ist, wobei das Verbindungselement (76) eine Öffnung definiert, die dazu eingerichtet ist, Hydraulikfluid aufzunehmen; und
eine flexible Leitung (74) innerhalb des Kanals (56), wobei die flexible Leitung (74) ein erstes Ende (78) und ein zweites Ende (80) definiert, wobei das erste Ende (78) mit der Leitung (68) verbunden ist und das zweite Ende mit dem Verbindungselement (76) verbunden ist,
**dadurch gekennzeichnet, dass**
das hydraulische Füllsystem (12) ein Rückhaltesystem (124) umfasst, das dazu eingerichtet ist, den Ausleger (50) in der eingeklappten Position zu sichern,
wobei das Rückhaltesystem (124) eine Halterung (86) umfasst, die mit dem Ausleger (50) verbunden ist, wobei die Halterung eine Aussparung (88) definiert, die dazu eingerichtet ist, einen vergrößerten Bereich (128) eines Schafts (130) zu halten, der mit dem Arbeitsfahrzeug (10) verbunden ist.

2. System nach Anspruch 1, wobei der Ausleger (50) eine Seitenwand (54) aufweist, wobei die Seitenwand (54) eine Ausnehmung (136) definiert, die einen Zugang zu der Befestigungseinrichtung (126) bereitstellt.

3. System nach Anspruch 1, umfassend einen ersten und einen zweiten Flansch (62, 64), die dazu eingerichtet sind, mit dem Hydraulikfluidtank (30) verbunden zu werden, und wobei der Ausleger (50) mit dem ersten und dem zweiten Flansch (62, 64) über ein erstes Verbindungselement (58, 60) und ein zweites Verbindungselement (58, 60) verbunden ist.

4. System nach Anspruch 1, wobei der Ausleger (50) dazu eingerichtet ist, zwischen 10 und 50 Grad zu rotieren.

5. System nach Anspruch 1, umfassend ein erstes ringförmiges Band (82) und ein zweites ringförmiges Band (84), wobei das erste ringförmige Band (82) die flexible Leitung (74) mit der Leitung (68) verbindet und das zweite ringförmige Band (84) die flexible Leitung (74) mit dem Verbindungselement (76) verbindet.

6. System nach Anspruch 1, wobei die flexible Leitung (74) eine erste Steifigkeit und die Leitung eine zweite Steifigkeit (68) aufweist, wobei die erste Steifigkeit geringer als die zweite Steifigkeit ist.

7. Arbeitsfahrzeug (10) umfassend den Hydraulikfluidtank (30) und das hydraulische Füllsystem (12) nach einem der vorangehenden Ansprüche.

## Revendications

1. Système de remplissage hydraulique (12) pour véhicule de travail (10) configuré pour être couplé à et faciliter le remplissage d'un réservoir de fluide hydraulique (30) dudit véhicule de travail (10), ledit réservoir de fluide hydraulique (30) comprenant un conduit (68) et étant configuré pour recevoir et stocker le fluide hydraulique ;
ledit système de remplissage hydraulique (12) comprenant :
un bras (50) configuré pour tourner par rapport au réservoir de fluide hydraulique (30) entre une position étendue et une position rétractée, le bras (50) définissant un canal (56) ;
un connecteur (76) couplé au bras (50), dans lequel le connecteur (76) définit une ouverture configurée pour recevoir un fluide hydraulique ; et
un conduit flexible (74) dans le canal (56), le conduit flexible (74) définissant une première extrémité (78) et une deuxième extrémité (80), dans lequel la première extrémité (78) est couplée au conduit (68) et la deuxième extrémité est couplée au connecteur (76),
**caractérisé en ce que**
ledit système de remplissage hydraulique (12) comprend un système de rétention (124) configuré pour sécuriser le bras (50) dans la position rétractée,
dans lequel le système de rétention (124) comprend un support (86) couplé au bras (50), le support définissant une fente (88) configurée pour maintenir une partie élargie (128) d'un arbre (130) couplée au véhicule de travail (10).

2. Système selon la revendication 1, dans lequel le bras (50) comprend une paroi (54), dans lequel la paroi (54) définit un creux (136) qui donne accès à ladite fixation (126).

3. Système selon la revendication 1, comprenant des première et deuxième brides (62, 64) configurées pour être couplées au réservoir de fluide hydraulique (30), et dans lequel le bras (50) est couplé aux première et deuxième brides (62, 64) avec un premier connecteur (58, 60) et un deuxième connecteur (58, 60).

4. Système selon la revendication 1, dans lequel le bras (50) est configuré pour tourner entre 10 et 50 degrés.

5. Système selon la revendication 1, comprenant une première bande annulaire (82) et une deuxième bande annulaire (84), dans lequel la première bande annulaire (82) couple le conduit flexible (74) au conduit (68), et la deuxième bande annulaire (84) couple le conduit flexible (74) au connecteur (76).

6. Système selon la revendication 1, dans lequel le conduit flexible (74) a une première rigidité et le conduit (68) a une deuxième rigidité, dans lequel la première rigidité est inférieure à la deuxième rigidité.

7. Véhicule de travail (10) comprenant le réservoir de fluide hydraulique (30) et le système de remplissage hydraulique (12) selon l'une quelconque des revendications précédentes.
